(19) Europäisches Patentamt
European Patent Office
Office européen des brevets

(11) **EP 3 064 606 B1**

(12) **EUROPEAN PATENT SPECIFICATION**

(45) Date of publication and mention
of the grant of the patent:
**02.03.2022 Bulletin 2022/09**

(21) Application number: **14857491.6**

(22) Date of filing: **31.10.2014**

(51) International Patent Classification (IPC):
$C22C\ 38/00^{\ (2006.01)}$    $C22C\ 38/26^{\ (2006.01)}$
$C22C\ 38/02^{\ (2006.01)}$    $C22C\ 38/06^{\ (2006.01)}$
$C22C\ 38/04^{\ (2006.01)}$    $C22C\ 38/22^{\ (2006.01)}$
$C22C\ 38/24^{\ (2006.01)}$    $C22C\ 38/28^{\ (2006.01)}$
$C22C\ 38/30^{\ (2006.01)}$    $C22C\ 38/32^{\ (2006.01)}$
$C22C\ 38/34^{\ (2006.01)}$    $C22C\ 38/42^{\ (2006.01)}$
$C23C\ 8/18^{\ (2006.01)}$    $H01M\ 8/0612^{\ (2016.01)}$
$C21D\ 1/76^{\ (2006.01)}$    $C21D\ 6/00^{\ (2006.01)}$
$C21D\ 1/74^{\ (2006.01)}$

(52) Cooperative Patent Classification (CPC):
**C22C 38/00; C21D 1/74; C21D 1/76; C21D 6/002;
C22C 38/001; C22C 38/002; C22C 38/005;
C22C 38/008; C22C 38/02; C22C 38/04;
C22C 38/06; C22C 38/22; C22C 38/24;
C22C 38/26; C22C 38/28;**    (Cont.)

(86) International application number:
**PCT/JP2014/079061**

(87) International publication number:
**WO 2015/064739 (07.05.2015 Gazette 2015/18)**

(54) **FERRITIC STAINLESS STEEL FOR USE IN FUEL REFORMER AND METHOD OF MANUFACTURING FERRITIC STAINLESS STEEL**

FERRITISCHER EDELSTAHL ZUR VERWENDUNG IN EINEM BRENNSTOFFREFORMER UND VERFAHREN ZUR HERSTELLUNG VON FERRITISCHEM EDELSTAHL

ACIER INOXYDABLE FERRITIQUE DESTINÉ À ÊTRE UTILISÉ DANS UN REFORMEUR DE COMBUSTIBLE ET PROCÉDÉ DE PRODUCTION D'ACIER INOXYDABLE FERRITIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.11.2013 JP 2013228158
01.11.2013 JP 2013228159**

(43) Date of publication of application:
**07.09.2016 Bulletin 2016/36**

(73) Proprietor: **NIPPON STEEL Stainless Steel
Corporation
Tokyo 100-0005 (JP)**

(72) Inventors:
• **HATANO, Masaharu**
  **Tokyo 100-0004 (JP)**
• **HAYASHI, Atsutaka**
  **Tokyo 100-0004 (JP)**
• **MATSUYAMA, Hiroyuki**
  **Tokyo 100-0004 (JP)**
• **ARIYOSHI, Haruki**
  **Tokyo 100-0004 (JP)**

(74) Representative: **Vossius & Partner
Patentanwälte Rechtsanwälte mbB
Siebertstrasse 3
81675 München (DE)**

(56) References cited:
EP-A1- 2 639 325        WO-A1-2012/124528
WO-A1-2013/080526       JP-A- 2003 328 088
JP-A- 2005 206 884      JP-A- 2008 156 692
JP-A- 2009 167 443      JP-A- 2011 162 843
JP-A- 2011 162 843      JP-A- 2011 190 524

**(Cont. next page)**

JP-A- 2012 102 376      JP-A- 2012 211 379
JP-A- 2013 100 595      JP-B2- 3 910 419
JP-B2- 3 942 876        US-A1- 2010 122 800

(52) Cooperative Patent Classification (CPC): (Cont.)
**C22C 38/30; C22C 38/32; C22C 38/34;**
**C22C 38/42; C23C 8/18; H01M 8/0618;**
C21D 2211/005; Y02E 60/50; Y02P 70/50

**Description**

Technical Field

The present invention relates to ferritic stainless steel suitable for reformers, heat exchangers, and other high temperature members of fuel cells used at the time of reforming city gas, methane, natural gas, propane, kerosene, gasoline, and other hydrocarbon-based fuels into hydrogen and to a method of production of the same.

Background Art

Recently, due to the depletion of petroleum and other fossil fuels, the phenomenon of global warming due to $CO_2$ emissions, and other issues, new systems of power generation taking the place of the conventional systems have been rapidly spreading. As one of these, attention is being focused on "fuel cells" with their high practical value as dispersed electric power sources for generating drive power for automobiles. There are several types of fuel cells, but among them, polymer electrolyte fuel cells (PEFC) and solid oxide fuel cells (SOFC) are high in energy efficiency and expected in terms of the spread of the utilization in the future.

Fuel cells are devices generating electric power through a reaction process reverse to the electrolysis of water and require hydrogen. Hydrogen is produced by a reforming reaction of city gas (LNG), methane, natural gas, propane, kerosene, gasoline, or other hydrocarbon-based fuel in the presence of a catalyst. Among these, fuel cells using city gas as starting fuel are advantageous in that hydrogen can be produced in regions where city gas pipelines have already been laid.

Reformers for hydrogen productionare usually operated at a 200 to 900°C high temperature in order to secure the amount of heat required for hydrogen reforming reactions. Furthermore, in such high temperature operation, they are exposed to oxidizing atmospheres containing large amounts of water vapor, carbon dioxide, carbon monoxide, etc. They are subjected to repeated heating and cooling cycles comprising startup and shutdown in accordance with the hydrogen demand. Up until now, as a practical material having sufficient durability in such a severe environment, austenitic stainless steel such as SUS310S (25Cr-20Ni) has been used. In the future, costs must be reduced in order to popularize and expand use of fuel cell systems. Reduction of the alloy costs by optimization of the materials which are to be used is an important issue.

In recent years, with the above-mentioned backdrop, studies on ferritic stainless steel not containing almost any expensive Ni have been disclosed. PLT 1 discloses ferritic stainless steels for petroleum-based reformer for hydrogen production having a composition comprised of Cr: 8 to 35%, C: 0.03% or less, N: 0.03% or less, Mn: 1.5% or less, Si: 0.8 to 2.5%, and/or Al: 0.6 to 6.0%, further containing one or more of Nb: 0.05 to 0.80%, Ti: 0.03 to 0.50%, Mo: 0.1 to 4%, and Cu: 0.1 to 4%, and adjusted in total amount of Si and Al to 1.5% or more. These stainless steels are characterized by a small amount of increase in oxidation at the time of heating to 900°C and cooling in a 50 vol%$H_2O$+20 vol%$CO_2$ atmosphere.

PLT 2 discloses ferritic stainless steels for hydrocarbon-based reformer for hydrogen production containing Cr: 12 to 20%, C: 0.03% or less, N: 0.03% or less, Si: 0.1 to 1.5%, Mn: 0.95 to 1.5%, and Al: 1.5% or less and further containing one or more of Nb: 0.10 to 0.80%, Mo: 0.1 to 4%, and Cu: 0.1 to 4%. These stainless steels are characterized by having an increase in amount of oxidation of 2.0 mg/cm$^2$ or less after 500 repeated cycles of heating to 700°C and cooling in a 50 vol%$H_2O$+20 vol%$CO_2$ atmosphere.

PLT 3 discloses ferritic stainless steels for alcohol-based reformer for hydrogen production containing Cr: 8 to 25%, C: 0.03% or less, N: 0.03% or less, Si: 0.1 to 2.5%, Mn: 1.5% or less, and Al: 0.1 to 4% and further containing one or more of Nb: 0.05 to 0.80%, Ti: 0.03 to 0.5%, Mo: 0.1 to 4%, and Cu: 0.1 to 4%. These stainless steels are characterized by having an increase in amount of oxidation of 2.0 mg/cm$^2$ or less after 500 repeated cycles of heating to 600°C and cooling in a 50 vol%$H_2O$+20 vol%$CO_2$ atmosphere.

PLT 4 discloses ferritic stainless steels optimal for power generation system containing Cr: 11 to 22%, C: 0.03% or less, N: 0.03% or less, Si: 2% or less, Mn: 1.5% or less, and Al: 1 to 6% and satisfying Cr+5Si+6Al≥30. These stainless steels are characterized by being excellent in oxidation resistance in a 50 vol%$H_2O$ atmosphere (balance of air).

PLT 5 discloses ferritic stainless steels optimal for a high temperature reforming device of a fuel cell containing Cr: 11 to 21%, C: 0.03% or less, N: 0.03% or less, Si: 3% or less, Mn: 1.0% or less, Al: 6% or less, Cu: 0.01 to 0.5%, Mo: 0.01 to 0.5%, Nb: 0.1% or less, Ti: 0.005 to 0.5%, Sn: 0.001 to 0.1%, O: 0.002% or less, H: 0.00005% or less, and Pb: 0.01% or less. These stainless steels are characterized by being excellent in oxidation resistance in a 10 vol%$H_2O$ atmosphere (balance of air).

The ferritic stainless steels of PLTs 1 to 3 are directed at improvement of the oxidation resistance in a 50 vol%$H_2O$+20 vol%$CO_2$ environment and are based on the technical ideas characterized by adding 2.5% or less of Si and 0.01% or more of Al to promote the formation of oxide films comprised mainly of Cr-based oxides and forming solid solutions of Y, REM, and further Ca and Al in the Cr-based oxides to strengthen the oxide films. PLTs 4 and 5 are directed at improvement of the oxidation resistance in environments containing 10 to 50 vol%$H_2O$ (balance air). The former is limited to ferritic stainless containing 1% or more of Al, while the latter is limited to 18Cr-1.9 to 3.3A1 ferritic stainless steel containing substantially 0.5% or less of Si.

PLT 10 relates to a specific ferritic stainless steel having a composition comprising, by mass, ≤ 0.03% C, 0.3 to 2.0% Si, ≤ 1.0% Mn, ≤ 0.04% P, ≤ 0.01% S, ≤ 0.2% Ni, 16 to 20% Cr, ≤ 0.03% N, 0.5 to < 2.0% Al, ≤ 0.3% Nb, 0.0005 to < 0.002% B, and a balance of Fe with inevitable impurities.

PLT 11 discloses a particular ferritic stainless steel having a chemical composition containing, by mass%, C: 0.015% or less, Si: 0.40 % or more and 1.00% or less, Mn: 1.00% or less, P: 0.040% or less, S: 0.010% or less, Cr: 12.0% or more and 23.0% or less, N: 0.015% or less, Nb: 0.30% or more and 0.65% or less, Ti: 0.150% or less, Mo: 0.10% or less, W: 0.10% or less, Cu: less than 1.00%, Al: 0.20% or more and 1.00% or less, while the relationship Si ≥ Al is satisfied, and the balance being Fe and inevitable impurities.

PLT 12 relates to a specific ferritic stainless steel for heat pipes of high-temperature exhaust heat recovery systems, which comprises, in terms of % by mass, from 16 to 32% of Cr, at most 0.03% of C, at most 0.03% of N, at most 3% of Si, at most 2% of Mn, at most 0.008% of S, from 0 to 0.3% of Al, and at least one of at most 0.7% of Nb, at most 0.3% of Ti, at most 0.5% of Zr and at most 1% of V, and optionally at least one of at most 3% of Mo, at most 3% of W, at most 3% of Cu, at most 0.1% of Y, at most 0.1% of rare earth metal and at most 0.01% of Ca, with a balance of Fe and inevitable impurities.

PLT 13 concerns a ferritic stainless steel characterized by containing, by mass, 0.001-0.030% C, more than 0.3% and up to 0.55% Si, 0.05-0.50% Mn, no more than 0.05% P, no more than 0.01% S, 19.0-28.0% Cr, from 0.01%) to less than 0.30% Ni, 0.2-3.0% Mo, more than 0.08% and up to 1.2% Al, 0.02-0.50% V, 0.005-0.50% Nb, 0.05-0.50% Ti, and 0.001-0.030% N and a remainder comprising Fe and unavoidable impurities.

PLT 14 relates to a ferritic stainless steel having a chemical composition comprising, by mass%, 8 to 35% Cr, 0.03% or less C, 0.03% or less N, 1.5% or less Mn, 0.008% or less S, 0.2 to 3.0% Si and/or 0.5 to 7.0% Al, and a balance substantially of Fe, and being adjusted so as to satisfy the relation of Cr(mass%) + 7 × (Si(mass%) + Al(mass%)) ≥ 22.

PLT 15 discloses a particular stainless steel comprising 0.10 mass% or less C, 0.02-3.0 mass% Si, 0.02-2.0 mass% Mn, 1.0 mass% or less Ni, 8.0-35.0 mass% Cr, 0.01-6.0 mass% Al, 0.10 mass% or less N, if necessary 0.01-1.0 mass% at least one element selected from among Y, rare earth elements, Ca, Nb, Ti, and V or 0.01-4.0 mass% of at least one element selected from among Mo, Cu, and W, the balance substantially being Fe.

Citation List

Patent Literature

PLT 1. Japanese Patent No. 3886785B
PLT 2. Japanese Patent No. 3942876B
PLT 3. Japanese Patent No. 3910419B
PLT 4. Japanese Patent Publication No. 2009-167443A
PLT 5. Japanese Patent Publication No. 2012-12674A
PLT 6. International Publication No. WO2014/010680A1
PLT 7. Japanese Patent Publication No. 5-320866A
PLT 8. Japanese Patent Publication No. 2008-101240A
PLT 9. Japanese Patent Publication No. 2002-256398A
PLT 10. Japanese Patent Publication No. 2011-162843A
PLT 11. EP Patent Application No. 2 639 325 A1
PLT 12. US Patent Application No. 2010/122800 A1
PLT 13. PCT Patent Application No. 2013/080526 A1
PLT 14. Japanese Patent Publication No. 2008-156692 A
PLT 15. Japanese Patent Publication No. 2003-328088 A

Summary of Invention

Technical Problem

The reformed gas of a fuel cell is made using the above city gas as a starting fuel and is characterized by containing a large amount of hydrogen in addition to water vapor/carbon dioxide/carbon monoxide. For example, in a reformed gas environment in which about 10 vol% or more of water vapor and about 10 vol% or more of hydrogen are copresent, compared with the air or a conventional high temperature water vapor environment, an oxide film comprised mainly of Cr-based oxides (below, also referred to as a "Cr-based oxide film") is difficult to form. There is a tendency for the oxidation of the inside steel structure, so-called internal oxidation of FeCr-based oxides, and further rapid growth of Fe-based oxides, that is, abnormal oxidation, to be aggravated.

There are many unclear points in the mechanism of promotion of these oxidation reactions, but it is believed that in a reformed gas environment, the hydrogen or water vapor assists the formation of defects in the oxide film, so the rate of growth of the Cr-based oxide film rises and consumption of Cr increases. Further, from the formed defects, $H_2O$, $CO_2$, and other oxidizing components pass through the Cr-based oxide film and directly oxidize the steel base material. Therefore, it is guessed, internal oxidation progresses more easily than even the growth of the Cr-based oxide film and, further, abnormal oxidation easily occurs. Furthermore, the formation of a solid solution of hydrogen in the steel structure may cause detrimental effects promoting abnormal oxidation. Therefore, when applying ferritic stainless steel to a reformer for hydrogen production, raising the durability of the Cr-based oxide film formed on the surface of the ferritic stainless steel and suppressing abnormal oxidation have become key technical issues.

PLT 6 discloses ferritic stainless steel plates for use for separators of solid oxide fuel cells having oxide films which can be formed by heat treatment before use of the solid oxide fuel cells or by the heat at the time of operation of the solid oxide fuel cells. However, above-mentioned heat treatment is not performed in a reformed gas environment where a large amount of water vapor and hydrogen are copresent. Therefore, it is unclear as to what extent the oxide films are promoted in a reformed gas environment in a fuel cell.

PLT 7 discloses ferritic stainless steels excellent in oxidation resistance having oxide layers comprised mainly of Cr and formed by ion bombarding at the surfaces and used in a 400°C or more high temperature environment.

Further, PLT 8 discloses heat conducting materials to be used for collecting heat from high temperature gas in the water vapor environment at about 800°C and made using ferritic stainless steels as base materials.

Further, PLT 9 discloses austenitic alloys for reformer high in high temperature corrosion resistance, free of remarkably carburizing even if exposed to corrosive gas at a high temperature, and substantially free of peeling of the oxide films in a heating and cooling cycle.

However, the inventions disclosed in PLTs 1 to 9 are unclear as to what extent they have the effect of suppression of internal oxidation in a high temperature atmosphere in which a large amount of water vapor and hydrogen are copresent. As explained above, reformed gas contains a large amount of water vapor and hydrogen. Hydrogen is also considered to be a factor promoting internal oxidation. However, in PLTs 1 to 9, the problem of the hydrogen in the reformed gas promoting internal oxidation of the stainless steel material is not focused on. The oxidation resistance in a high temperature atmosphere where not only a large amount of water vapor but also a large amount of hydrogen are present has not been sufficiently studied.

The present invention provides ferritic stainless steel plate for reformer for hydrogen production free from abnormal oxidation in a reformed gas environment in which a large amount of water vapor and hydrogen are copresent, excellent in durability of the Cr-based oxide film, and provided with economy as well. Solution to Problem

The inventors et al. worked to solve the above problem by conducting intensive research and studies on the action of Si and Mn and trace elements of Nb, Ti, Al, V, B, and Mg which act on the durability of a Cr-based oxide film formed on the surface of ferritic stainless steel and the action of Si and Mn in the Cr-based oxides in an atmosphere containing a large amount of water vapor and hydrogen simulating a reformed gas environment and obtained the following findings:

(a) The new finding was obtained that in a reformed gas environment in which a large amount of water vapor and hydrogen are copresent, the Si and Mn are dissolved in the Cr-based oxides and contribute to the growth of the Cr-based oxide film and suppression of internal oxidation. Furthermore, Si and Mn form oxides directly under the Cr-based oxide film and thereby concentrate there so as to delay the progression of internal oxidation due to hydrogen or water vapor and to suppress abnormal oxidation accompanying formation of an oxide film comprised mainly of Fe-based oxides. Due to such an action and effect, the Cr-based oxide film can be raised in durability.

(b) To further raise the above Cr-based oxide film in durability, it was found that addition of a trace amount of Nb was effective. Nb forms an oxide directly under the Cr-based oxide film and thereby concentrates there so as to suppress internal oxidation and grain boundary oxidation and thereby improve the durability of the Cr-based oxide film.

(c) It was learned that addition of trace amounts of V, B, and Mg also gives rise to effects similar to Nb. Due to the addition of trace amounts of these elements, the effect of addition of Nb is multiplied.

(d) On the other hand, Al and Ti are dissolved in the Cr-based oxides or concentrate at the interfaces and thereby also have the action of strengthening the oxide film, but it was learned that in the reformed gas environment, depending on the amounts of addition, there is also the action of aggravating progression of internal oxidation and grain boundary oxidation and thereby impairing the durability of the Cr-based oxide film.

(e) It was learned that in an atmosphere containing water vapor and hydrogen, by performing preliminary oxidation with specific conditions of atmosphere, temperature, and treatment time, it is possible to concentrate the Si and Mn in the Cr-based oxides and raise the Cr-based oxide film in durability.

As explained above, the completely novel finding was obtained that by optimizing the amounts of Si, Mn, and Nb, adding trace amounts of V, B, and Mg, and adjusting the amounts of addition of Al and Ti in a reformed gas environment, it is possible to impart durability to a Cr-based oxide film without relying on rare earth elements or addition of a large amount of Ni. The present invention of the following (1) was perfected based on the above-mentioned results of study.

(1) Ferritic stainless steel for reformer as defined in claim 1.

Due to this composition, by exposing the surface of the ferritic stainless steel of the present invention to an atmosphere of a reformed gas environment containing a large amount of hydrogen in addition to water vapor/carbon dioxide/carbon monoxide, an oxide film mainly comprised of Cr-based oxides, that is, a Cr-based oxide film, is formed, and the Cr-based oxides contain at least one element among Si and Mn in 0.5 mass% or more. By including at least one element among Si and Mn in 0.5 mass% or more in the Cr-based oxides, it is possible to contribute to the growth of the Cr-based oxide film and the suppression of internal oxidation and possible to obtain sufficient durability in a reformed gas environment.

Further, the "Cr-based oxides" are oxides with Cr detected together with O by glow discharge mass spectrometry (GDS analysis) and with Cr detected in 50 mass% or more. Further, "mainly comprised of" means the ratio of the volume of the Cr-based oxides in the oxide film as a whole to the volume of the oxide film as a whole is 50% or more. The Cr-based oxide film of the ferritic stainless steel of the present invention may also contain $MnCr_2O_4$, $SiO_2$, $Al_2O_3$, etc. in addition to the
Cr-based oxides.

The invention is defined in the claims.

Disclosed herein are the following items (8) to (13).

(8) Ferritic stainless steel for reformer for hydrogen production having a composition containing, by mass%, Cr: 12% to 24%, C: 0.001% to 0.03%, Al: 0.002% to 4%, P: 0.05% or less, S: 0.01% or less, N: 0.03% or less, and Nb: 0.011 to 1%, further containing at least one of Si: 0.3% to 4% and Mn: over 0.1% to 2%, having a balance of Fe and unavoidable impurities, and satisfying formula (i) and, when held in a 26 vol%$H_2O$+7 vol%$CO_2$+7% vol%CO+60 vol%$H_2$ atmosphere at 850°C for 1000 hours, then cooled down to room temperature, formed on its surface with an oxide film, wherein the oxide film contains one element among Si and Mn alone in 0.5 mass% or more or both elements of Si and Mn respectively in 0.5 mass% or more and contains both Cr and O in 50 mass% or more in total.

$$Cr+5Si+Mn+2Nb≥22 \quad \cdots(i)$$

where, the symbols of elements in the formula mean the content in mass% of those elements in the steel.

(9) Ferritic stainless steel for reformer for hydrogen production having a composition containing, by mass%, Cr: 12% to 24%, C: 0.001% to 0.03%, Al: 0.002% to 4%, P: 0.05% or less, S: 0.01% or less, N: 0.03% or less, and Nb: 0.011 to 1%, further containing at least one of Si: 0.3% to 4% and Mn: over 0.1% to 2%, having a balance of Fe and unavoidable impurities, and satisfying formula (i) and,
when held in a 20 vol%$H_2O$+15 vol%$CO_2$+5% vol%CO+30 vol%$H_2$+30 vol%$N_2$ atmosphere at 650°C for 100 hours, then held in a 26 vol%$H_2O$+7 vol%$CO_2$+7% vol%CO+60 vol%$H_2$ atmosphere at 850°C for 1000 hours, then cooled down to room temperature, formed on its surface with an oxide film, wherein the oxide film contains one element among Si and Mn alone in 0.5 mass% or more or both elements of Si and Mn respectively in 0.5 mass% or more and contains both Cr and O in 50 mass% or more in total.

$$Cr+5Si+Mn+2Nb≥22 \quad \cdots(i)$$

where, the symbols of elements in the formula mean the content in mass% of those elements in the steel.

(10) The ferritic stainless steel for reformer for hydrogen production according to (8) or (9) wherein Mn is less than 0.95%.

(11) The ferritic stainless steel for reformer for hydrogen production according to any one of (8) to (10) wherein Si is over 2.50.

(12) The ferritic stainless steel for reformer for hydrogen production according to any one of (8) to (11) wherein Al is 0.5% or less.

(13) The ferritic stainless steel for reformer for hydrogen production according to any one of (8) to (12) further comprising, by mass%, one or more of Ni: 1% or less, Cu: 1% or less, Mo: 2% or less, Sn: 1% or less, W: 1% or less, Co: 0.5% or less, V: 0.5% or less, Ti: 0.3% or less, B: 0.005% or less, Ca: 0.005% or less, Mg: 0.005% or less, Zr: 0.5% or less, La: 0.1% or less, Y: 0.1% or less, Hf: 0.1% or less, or an REM: 0.1% or less.

Below, the invention according to the steels according to the present claims will be respectively referred to as "present inventions"or

"present invention".

Advantageous Effects of Invention

According to the present invention, it is possible to provide ferritic stainless steel for reformer for hydrogen production with both excellent oxidation resistance and economy.

Brief Description of Drawings

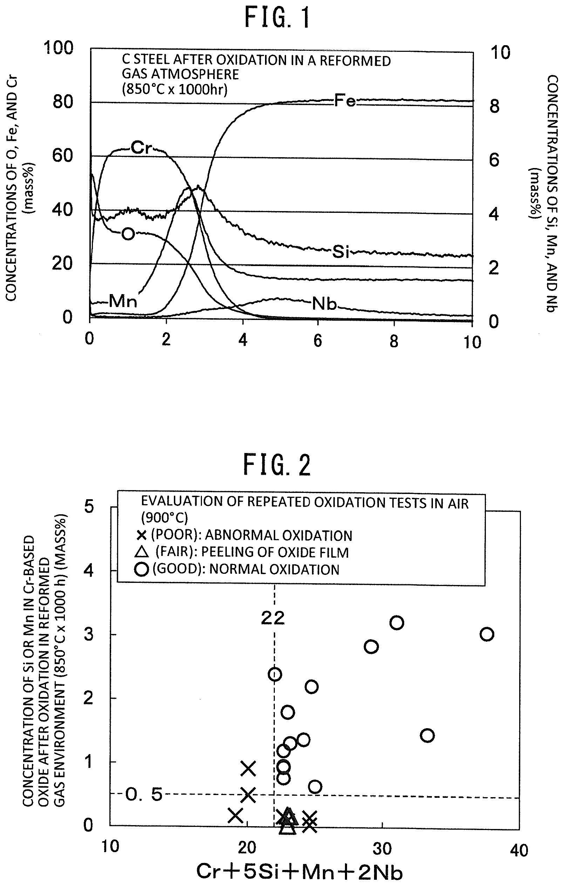

FIG. 1 is a view showing the results of GDS analysis of the composition of an oxide film after oxidation tests at 850°C for 1000 hours simulating a reformed gas environment and showing the profiles of the elements in the depth direction for Invention No. 3 of Table 2.
FIG. 2 is a view showing the effects of the formula (i) prescribed in the present invention and the higher value of Si and Mn contained in the Cr-based oxides in the Cr-based oxide film after oxidation tests simulating a reformed gas environment on the evaluation at the heating temperature of 900°C in the repeated oxidation tests in the air for the Invention Example Nos. 1 to 14 and Comparative Examples Nos. 19, 20, 22, 23, 25, 27, 30, 35, and 36 of Table 2.

Description of Embodiments

Below, the requirements of the present invention will be explained in detail. Note that the notations "%" of the contents of the elements mean "mass%".

An oxide film mainly comprised of Cr-based oxides containing the above predetermined Si and Mn is formed on the surface of stainless steel in a reformed gas environment of a reformer for hydrogen production explained in the following (III) using ferritic stainless steel having the components prescribed in the present invention explained in the following (I). In part of the system of components of the present invention, the predetermined preliminary oxidation explained in the following (IV) is performed, then the film is formed on the surface of the stainless steel in the reformed gas environment of the reformer for hydrogen production.

(I) The reasons for limitation of the steel components will be explained below.

Cr is a basic component element for giving not only corrosion resistance, but also the targeted durability to a Cr-based oxide film. In the present invention, if less than 12%, the targeted oxidation resistance is not sufficiently secured. Therefore, the lower limit is made 12%. However, excessive addition not only aggravates the formation of a brittle phase of the σ phase when exposed to a high temperature atmosphere, but also invites a rise in the alloy costs. The upper limit is made 24% from the viewpoints of the basic properties and the alloy costs. From the viewpoints of the basic properties, oxidation resistance, and costs, the preferable range is 14.5 to 22.5%. The more preferable range is 17.5 to 20%.

C forms a solid solution in the ferrite phase or forms Cr carbides and thereby inhibits the oxidation resistance targeted by the present invention. For this reason, the amount of C should be as small as possible. The upper limit is made 0.03%. However, excessive reduction leads to a rise in the refining costs, so the lower limit is made 0.001%. From the viewpoints of the oxidation resistance and the manufacturing ability, the preferable range is 0.002 to 0.02%.

Mn is dissolved in the Cr-based oxides together with Si in a reformed gas environment and thereby raises the durability of the film. These effects are obtained from over 0.1%. On the other hand, excessive addition leads to a drop in the corrosion resistance and oxidation resistance of the steel, so the upper limit is made 2%. From the viewpoints of the oxidation resistance and the basic properties, the preferable range is 0.2 to 1.5%. In the preferable range of Mn, Mn forms oxides right under the Cr-based oxide film to thereby concentrate there and delays the progression of internal oxidation due to the hydrogen or water vapor.

If the content of Mn in the steel is over 0.1%, when used in a reformed gas environment of the reformer for hydrogen production explained in the following (III), the content of Mn in the Cr-based oxides can be made 0.5 mass% or more. However, even if the content of Mn in the steel is over 0.1%, if the later explained content of Si is 2.5% or less and the content of Al is over 0.5%, after the steel is only used in a reformed gas environment of a reformer for hydrogen production explained in the following (III), the content of Mn in the Cr-based oxides may not be able to be made 0.5 mass% or more. However, even with such steel components, for example, if performing the predetermined preliminary oxidation explained in the following (IV), it is possible to stably make the content of Mn 0.5 mass% or more in the Cr-based oxides formed in a later reformed gas environment of a reformer for hydrogen production.

If the content of Mn is 0.95% or more, after the steel is only used in a reformed gas environment of a reformer for hydrogen production explained in the following (III), the oxide film formed on the surface ends up mainly comprised of (Cr, Mn)-based oxides and the Cr-based oxides of the present invention might not be formed. Therefore, the content of Mn is preferably less than 0.95%. Therefore, to make positive use of the effects of Si and Mn, the upper limit is more preferably made less than 0.95% and the still more preferable range is 0.2% to 0.8%. However, even if the content of Mn is 0.95% or more, for example, if performing the predetermined oxidation explained in the later (IV), Cr-based oxides are stably formed on the surface of the stainless steel in the later reformed gas environment of a reformer for hydrogen production.

P is an element obstructing the manufacturing ability and the weldability. The smaller its content the better, so the upper limit is made 0.05%. However, excessive reduction leads to a rise in the refining costs, so the lower limit is preferably made 0.003%. From the viewpoints of the manufacturing ability and the weldability, the preferable range is 0.005 to 0.04%, while the more preferable one is 0.01 to 0.03%.

S is an unavoidable impurity element contained in steel and lowers the oxidation resistance targeted by the present invention. In particular, the presence of Mn-based inclusions Mn or solid solution S acts as starting points for breakage of the Cr-based oxide film by high temperature, long term use. Therefore, the lower the amount of S the better, so the upper limit is made 0.01%. However, excessive reduction leads to a rise in the costs of the starting materials and refining, so the lower limit is made 0.0001%. From the viewpoints of the manufacturing ability and the oxidation resistance, the preferable range is 0.0001 to 0.002%, while the more preferable one is 0.0002 to 0.001%.

N, like C, obstructs the oxidation resistance targeted by the present invention. For this reason, the smaller the amount of N the better, so the upper limit is made 0.03%. However, excessive reduction leads to a rise in the refining costs, so the lower limit is preferably made 0.002%. From the viewpoints of the oxidation resistance and the manufacturing ability, the preferable range is 0.005 to 0.02%.

Nb acts as a stabilizing element fixing the C and N to purify the steel highly and thereby improves the oxidation resistance and also forms oxides right under the Cr-based oxide film to thereby concentrate there so as to suppress the progression of internal oxidation or grain boundary oxidation under a reformed gas environment and thereby acts to raise the durability of the Cr-based oxide film targeted by the present invention. These effects of addition of Nb are obtained from 0.01% or more. On the other hand, excessive addition leads to a rise in the alloy costs and a drop in the manufacturing ability along with the rise in the recrystallization temperature, so the upper limit is made 1%. From the viewpoints of the oxidation resistance and the alloy costs, the preferable range is 0.1 to 0.6%, while the more preferable range is 0.2 to 0.4%.

Si is an important element in securing the oxidation resistance targeted by the present invention. It is dissolved in the Cr-based oxides in a reformed gas environment and raises the durability of the Cr-based oxide film. These effects are obtained from 0.3% and become remarkable if over 2.5%. On the other hand, excessive addition invites a drop in workability and weldability of the steel, so the upper limit is made 4%. From the viewpoint of the oxidation resistance and the basic properties, the preferable range is 0.4 to 3.5%. In the preferable range of Si, Si forms oxides right under the Cr-based oxide film to thereby concentrate there and delay the progression of internal oxidation due to hydrogen or water vapor. In order for at least one of Si and Mn to be dissolved in the Cr-based oxides to contribute to growth of the Cr-based oxide film and suppression of internal oxidation, the contents are preferably ones satisfying at least one of the Si being 0.3% or more and Mn being over 0.1% in the steel. Further, to make positive use of the effects of Si and Mn, the lower limit of Si is more preferably over 2.50%. The more preferable range of Si is over 2.50% to 3.5%.

If the content of Si exceeds 2.5%, when used in a reformed gas environment of a reformer for hydrogen production explained in the following (III), the content of Si in the Cr-based oxides can be made 0.5 mass% or more. If the content of Si is 0.3% or more and the following content of Al is 0.5% or less, when used in a reformed gas environment of a reformer for hydrogen production explained in the following (III), the content of Si in the Cr-based oxides can be made 0.5 mass% or more. If the content of Si is 0.3% or more and the content of Al is over 0.5%, after the steel is only used in a reformed gas environment of a reformer for hydrogen production explained in the following (III), the content of Si in the Cr-based oxides may not be able to be made 0.5 mass% or more. However, even with such steel components, for example, if performing the predetermined preliminary oxidation explained in the later (IV), it is possible to stably make the content of Si in the Cr-based oxide film 0.5 mass% or more after the steel is used in a reformed gas environment of a reformer for hydrogen production explained in the following (III).

Al is a deoxidizing element and an element effective for raising the oxidation resistance and is contained in 0.001% or more. On the other hand, excessive addition invites a drop in the workability or weldability of the steel, so the upper limit is made 4%. From the viewpoints of the alloy costs and manufacturing ability, the upper limit is preferably made 2%. Further, addition of a large amount of Al aggravates the progression of internal oxidation or grain boundary oxidation in a reformed gas environment and leads to impairment of the durability of the Cr-based oxide film targeted by the present invention. To positively raise the durability of the Cr-based oxide film, the upper limit is more preferably made 0.5%. From the viewpoints of the oxidation resistance and deoxidizing ability, the more preferable range is 0.002 to 0.2%, and the still more preferable range is 0.01 to 0.08%.

In addition to the contents of Cr, Si, Mn, and Nb, in the present invention, to promote the formation of the targeted Cr-based oxide film in the reformed gas environment, as shown in formula (i), Cr+5Si+Mn+2Nb≥22. To form a high durability Cr-based oxide film, the addition of Si effectively functions. Composite addition of Si with Mn and Nb is suitable. From the viewpoint of raising more the durability of the Cr-based oxide film, the value of formula (i) is preferably 25 or more, more preferably 30 or more. The upper limit of the value of formula (i) is not particularly defined, but considering the effect of the addition of Cr and Si on the manufacturing ability of the steel, it is preferably made 40. Further, the coefficients relating to the different elements in formula (i) are based on the discovery that the effect of reformed Si containing in the steel material a large amount of water vapor and hydrogen is 5 times that of Cr, the effect of the Nb contained in the steel material is 2 times that of Cr, and the effect of the Mn contained in the steel material is equal to that of Cr. The discovery was attained using steel materials containing various components.

As explained in the above paragraphs on Mn and Si, when the ferritic stainless steel of the present invention satisfies the conditions of Mn: less than 0.95%, Si: over 2.50%, and/or Al: 0.5% or less, there is no need to perform the predetermined preliminary oxidation explained in the following (IV). When used in a reformed gas environment of a reformer for hydrogen production explained in the following (III), the content of Si and/or Mn in the Cr-based oxides can be made 0.5 mass% or more, so this is preferable.

Further, the ferritic stainless steel of the present invention may further contain, as needed, one or more of Ni: 1% or less, Cu: 1% or less, Mo: 2% or less, Sn: 1% or less, W: 1% or less, Co: 0.5% or less, V: 0.5% or less, Ti: 0.3% or less, B: 0.005% or less, Ca: 0.005% or less, Mg: 0.005% or less, Zr: 0.5% or less, La: 0.1% or less, Y: 0.1% or less, Hf: 0.1% or less, and REM: 0.1% or less.

Ni, Cu, Mo, Sn, W, and Co are elements effective for raising the oxidation resistance and high temperature strength in a reformed gas environment and are added according to need. However, excessive addition leads to a rise in alloy costs and obstruction of manufacturability, so the upper limits of Ni, Cu, Sn, and W are made 1%. Mo is an element reducing the coefficient of thermal expansion of the ferritic stainless steel of the present invention and effective also for suppressing high temperature deformation, so the upper limit of the amount of addition of Mo is 2%, more preferably less than 0.5%. Each of the elements has more preferable lower limits of content of 0.1%.

V, B, and Mg are elements promoting the effect of improvement of the oxidation resistance by the addition of Nb and are added as needed. However, excessive addition would lead to a rise in the alloy costs or obstruction of manufacturing ability, so the upper limit of V is made 0.5%, while the upper limit of each of B and Mg is made 0.005%. The more preferable lower limit of content of V is 0.05%, while the more preferable lower limit of each of B and Mg is 0.0002%. Further, even when each of the amounts of addition of B and Mg does not satisfy the above lower limit, the effect of improvement of the oxidation resistance is promoted if these amounts of addition satisfy the following formula (ii).

$$B+Mg≥0.0002\% \cdots (ii)$$

where, the symbols of elements in the formula mean the content in mass% of those elements in the steel.

Ti acts as a stabilizing element fixing the C and N and thereby improves the oxidation resistance through further purifying the steel and is added as needed. However, excessive addition assists the progression of internal oxidation and grain boundary oxidation in a reformed gas environment and leads to impairment of the durability of the Cr-based oxide film targeted by the present invention. Therefore, the content of Ti is limited to be 0.3% or less. From the viewpoint of the oxidation resistance, the preferable lower limit of content is made 0.01%.

Ca is an element improving the hot workability and the secondary workability and is added as needed. However, excessive addition leads to impairment of the manufacturing ability, so the upper limit is made 0.005%. The preferable lower limit is made 0.0001%.

Zr, La, Y, Hf, and REM are elements effective for improvement of the hot workability and cleanliness of the steel since the past and for improvement of the oxidation resistance of the present invention and are added as needed. However, from the viewpoints of the technical idea and alloy costs of the present invention, the effects of addition of these elements are not relied on. However, when added, the upper limit of Zr is made 0.5% and the upper limits of La, Y, Hf, and REM are made respectively 0.1%. The more preferable lower limit of Zr is 0.01%, while the preferable lower limits of La, Y, Hf, and REM are made 0.001%. Here, "REM" are elements belonging to the atomic numbers 57 to 71 and for example are Ce, Pr, Nd, etc.

(II) The method of production will be explained below.

Steel plate which is prepared using the ferritic stainless steel of the present invention mainly covers cold rolled and annealed plate obtained by cold rolling a hot rolled steel strip with annealing or without annealing, descaling it, then cold rolling it, then performing the final annealing and descaling. In some cases, hot rolled and annealed plate which had not been cold rolled may also be used. Furthermore, for gas pipe use, welded pipes produced from steel plates are also included. The pipes are not limited to welded pipes. Seamless pipes produced by hot working are also possible. The final annealing of the above-mentioned steel is preferably performed at 700 to 1100°C. If less than 700°C, the softening and recrystallization of the steel become insufficient and sometimes the predetermined material properties cannot be obtained. On the other hand, if over 1100°C, the grains become coarse and the toughness and ductility of the steel will sometimes be impaired.

(III) The use in a reformed gas environment of a reformer for hydrogen production will be explained.

An oxide film mainly comprised of Cr-based oxides containing Si and/or Mn in 0.5 mass% or more present at the surface of the ferritic stainless steel of the present invention is formed on the surface of the stainless steel by exposing ferritic stainless steel having the above composition prescribed in the present invention in a reformed gas environment of a reformer for hydrogen production. "In a reformed gas environment" means exposure to an environment of an atmosphere containing a large amount of water vapor, hydrogen, carbon dioxide, carbon monoxide, etc. at a high temperature of 200 to 900°C.

(IV) Explanation of Preliminary Oxidation which is preferred to be performed at the initial period of operation of system of reformer for hydrogen production.

In part of the steel components of the above-mentioned present invention, to form an oxide film mainly comprised of Cr-based oxides containing Si and/or Mn in 0.5 mass% or more on the surface of stainless steel in a reformed gas environment of a reformer for hydrogen production, it is effective to perform preliminary oxidation before using the ferritic stainless steel for reformer for hydrogen production and, at the initial stage of system operation, form a dense oxide film in which Cr and also Si or Mn are concentrated on the surface of the steel plate in a uniform manner. By forming a dense oxide film on the surface before operation of the reformer for hydrogen production, it is possible to raise the uniformity and barrier property of the oxide film formed first compared with the state of the metal surface and possible to further improve the adhesion between the oxidation resistance and oxide film over long periods of use.

However, when performing preliminary oxidation, the preliminary oxidation atmosphere is made an atmosphere containing water vapor and hydrogen and the preliminary oxidation temperature is made 300 to 1000°C. Under such conditions, it is possible to cause Si and Mn to be dissolved in the Cr-based oxides and concentrate these elements right under the film as well so as to form a high durability oxide film. If the preliminary oxidation temperature is low, almost no oxide film is formed, so the lower limit is made 300°C, preferably 400°C. On the other hand, if the preliminary oxidation temperature is high, the oxide film will contain a large amount of Fe and the durability will be lowered, so the upper limit is made 1000°C, preferably less than 850°C.

The upper limit of the preliminary oxidation time is not particularly prescribed, but is preferably made 200 hours or less. Furthermore, to form a high durability Cr-based oxide film even in a short time of 100 hours or less, it is preferable to make the water vapor and hydrogen in the preliminary oxidation atmosphere respectively 10 vol% or more. If the water vapor is less than 10 vol%, the oxidizing ability is low and the growth of an oxide film becomes slower, so the lower limit of the preliminary oxidation time is preferably made over 100 hours. If the hydrogen is less than 10 vol%, solid solutions of Si and Mn in the Cr-based oxides tend to be slow in progression, so the lower limit of the preliminary oxidation time is preferably made over 100 hours. The upper limits of the water vapor and hydrogen are not particularly prescribed, but the upper limit of the water vapor is preferably 50 vol% and the upper limit of the hydrogen is preferably 70 vol%.

Further, the preliminary oxidation atmosphere may also contain nitrogen, carbon dioxide, carbon monoxide, hydrocarbon-based gases, and other gases. The range of the other gases is not particularly prescribed, but the upper limit is preferably made 30 vol%. Further, if the total of the reducing gases of hydrogen and carbon monoxide is 50 vol% or more, the oxidizing ability is low and the growth of an oxide film becomes slower, so the total of the oxidized gases of water vapor and carbon dioxide is preferably made 20 vol% or more, more preferably over 32 vol%.

The thickness of the Cr-based oxide film obtained by the preliminary oxidation is preferably 0.01 $\mu$m or more so as to maintain the durability in a high temperature reformed gas environment. The upper limit of the film thickness is not particularly prescribed, but considering the efficiency of the preliminary oxidation, it is preferably made 5 $\mu$m. The ratio of the volume or thickness of the Cr-based oxides in the oxide film obtained by preliminary oxidation is 50% or more. $MnCr_2O_4$, $SiO_2$, $Al_2O_3$, etc. which cause durability in a reformed gas environment may also be contained in the oxide film.

The ferritic stainless steel of the present invention for reformer for hydrogen production has its surface where an oxide film mainly comprised of Cr-based oxides containing Si and/or Mn in 0.5 mass% or more is formed, and Si, Mn, and Nb are preferably concentrated between the oxide film and the base material of the ferritic stainless steel. Due to this, it is possible to form a Cr-based oxide film having excellent durability. The presences of Si and Mn in the Cr-based oxides can be judged by whether Cr is detected together with O by glow discharge mass spectrometry (GDS analysis) and by whether Si or Mn is detected in 0.5 mass% or more in the oxide in which Cr was detected in 50 mass% or more. Further, for the concentration of Si, Mn, and Nb between the Cr-based oxide film and the base material, by observing a cross-section of the oxide film by an FE-SEM and analyzing elements by EDS, it is possible to judge if Si, Mn, and Nb have been detected at higher concentrations right under the Cr-based oxide film compared with the base material.

Further, the preliminary oxidation may be performed before operation of the reformer for hydrogen production or may be performed before forming the ferritic stainless steel having the above-mentioned composition of the present invention into a component part of the reformer for hydrogen production. Alternatively, the preliminary oxidation may be performed after forming the ferritic stainless steel having the above-mentioned composition of the present invention into a component part of the reformer for hydrogen production.

The preliminary oxidation is not limited to a single time and may be performed a plurality of times. Further, the preliminary oxidation may be performed by performing preliminary oxidation of less than 100 hours several times so that the preliminary oxidation time in total exceeds 100 hours. Alternatively, the preliminary oxidation may be performed several times under the same conditions or different conditions until the surface of the ferritic stainless steel is formed with an oxide film mainly comprised of Cr-based oxides containing Si and/or Mn in 0.5 mass% or more.

Further, to evaluate the Cr-based oxide film formed on a ferritic stainless steel surface before use of a reformer for hydrogen production in a reformed gas environment, the ferritic stainless steel of the present invention may be heat treated simulating a reformed gas environment.

As simulated heat treatment for evaluating the surface structure of the ferritic stainless steel of the present invention, for example, the following heat treatments may be illustrated. Further, the simulated heat treatments able to be applied to the ferritic stainless steel of the present invention are not limited to these conditions of simulated heat treatment needless to say.

That is, ferritic stainless steel for reformer for hydrogen production having a composition containing, by mass%, Cr: 12% to 24%, C: 0.001% to 0.03%, Al: 0.001% to 4%, P: 0.05% or less, S: 0.01% or less, N: 0.03% or less, and Nb: 0.01% to 1%, further containing at least one of Si: 0.3% to 4% and Mn: over 0.1% to 2%, having a balance of Fe and unavoidable impurities, and satisfying the above-mentioned formula (i) may be heat treated simulating a reformed gas environment of a reformer for hydrogen production by heating it in an atmosphere of 26 vol%$H_2O$+7 vol%$CO_2$+7% vol%CO+60 vol%$H_2$ at 850°C, holding it at 850°C for 1000 hours, then cooling it down to room temperature as simulated heat treatment 1.

Further, ferritic stainless steel for reformer for hydrogen production having a composition containing, by mass%, Cr: 12% to 24%, C: 0.001% to 0.03%, Al: 0.001% to 4%, P: 0.05% or less, S: 0.01% or less, N: 0.03% or less, and Nb: 0.01% to 1%, further containing at least one of Si: 0.3% to 4% and Mn: over 0.1% to 2%, having a balance of Fe and unavoidable impurities, and satisfying the above-mentioned formula (i) may be heat treated simulating a reformed gas environment of a reformer for hydrogen production by heating it in an atmosphere of 26 vol%$H_2O$+7 vol%$CO_2$+7% vol%CO+60 vol%$H_2$ at 850°C, holding it at 850°C for 1000 hours, then cooling it down to room temperature as simulated heat treatment 2.

By performing the above-mentioned simulated heat treatment 1 or 2, it is possible to form an oxide film mainly comprised of Cr-based oxides containing Si and/or Mn in 0.5 mass% or more on the surface of the stainless steel.

Further, the ferritic stainless steel having the composition of components prescribed in the present invention may be treated simulating the preliminary oxidation, then heat treated simulating a reformed gas environment of a reformer for hydrogen production before use in a reformed gas environment of the reformer for hydrogen production to check whether the ferritic stainless steel is stainless steel having a Cr-based oxide film of the present invention.

For example, ferritic stainless steel for reformer for hydrogen production having a composition containing, by mass%, Cr: 12% to 24%, C: 0.001% to 0.03%, Al: 0.001% to 4%, P: 0.05% or less, S: 0.01% or less, N: 0.03% or less, and Nb: 0.01% to 1%, further containing at least one of Si: 0.3% to 4% and Mn: over 0.1% to 2%, having a balance of Fe and unavoidable impurities, and satisfying the formula (i) may be heated in an atmosphere of 20 vol%$H_2O$+15 vol%$CO_2$+5% vol%CO+30 vol%$H_2$+30 vol%$N_2$ at 650°C, heat treated at 650°C for 100 hours, then treated by the above-mentioned simulated heat treatment 1 or 2.

Ferritic stainless steel treated by the above-mentioned simulated heat treatment may further contain, by mass%, one or more of Ni: 1% or less, Cu: 1% or less, Mo: 2% or less, Sn: 1% or less, W: 1% or less, Co: 0.5% or less, V: 0.5% or less, Ti: 0.3% or less, B: 0.005% or less, Ca: 0.005% or less, Mg: 0.005% or less, Zr: 0.5% or less, La: 0.1% or less, Y: 0.1% or less, Hf: 0.1% or less, and REM: 0.1% or less.

By performing the above-mentioned simulated heat treatment, it is possible to confirm that the surface of the ferritic stainless steel is formed with an oxide film mainly comprised of Cr-based oxides containing Si and/or Mn in 0.5 mass% or more.

Further, the composition of the atmosphere of the above simulated reformed gas environment may suffer from error of about $\pm 3$ vol%, but this is not an extent causing the evaluation of an oxide film to change, so such error is allowed.

Examples

Below, examples of the present invention will be explained.

The various types of ferritic stainless steels of the components shown in Table 1 were smelted, hot rolled, annealed and pickled, cold rolled, and final annealed to produce thickness 1.0 mm cold rolled annealed materials.

From the ferritic stainless steels, test pieces were cut out. The cold rolled annealed plates were used for the oxidation tests. The oxidation tests were performed envisaging the atmosphere to which the steel materials are exposed in a reformed gas environment. The atmosphere was made 26 vol%$H_2O$+7 vol%$CO_2$+7% vol%CO+60 vol%$H_2$. The oxidation tests were performed by heating to 850°C, holding at 850°C for 1000 hours, then cooling down to room temperature.

The composition of the surface oxide film formed in the above reformed gas environment was evaluated by GDS analysis. The Si and Mn in Cr-based oxides with Cr detected along with O in 50 mass% or more were made the values of Si and Mn at the same depth positions as the depth position where Cr becomes the highest concentration.

Furthermore, the surface oxide films formed in the above reformed gas environment were evaluated for durability by repeated oxidation tests in the air. By these tests, it is possible to raise or lower the temperature corresponding to the temperature at the time when a reformer for hydrogen production is started up or stopped or raise or lower the temperature to a temperature more than that and possible to investigate the breakage of the oxide film and occurrence of abnormal oxidation accompanying the same. Note that, performing repeated oxidation tests in an atmosphere containing water vapor and hydrogen is generally difficult. In this evaluation, repeated oxidation tests in the air were therefore run. A test piece after oxidation in the above reformed gas environment and not used for GDS analysis was used as a test piece. The heating temperature was made 800°C, 900°C, and 1000°C. One cycle was made heating for 25 minutes and air-cooling for 5 minutes. The operation was performed for 400 cycles. Test pieces where peeling of the oxide film occurred were evaluated as "Fair", test pieces where the peeling of the oxide film occurred and abnormal oxidation was caused were evaluated as "Poor", and test pieces where there was no peeling of the oxide film and no abnormal oxidation either were evaluated as "Good". The targeted durability of a Cr-based oxide film of the present invention is "Good" at a heating temperature of 900°C or more.

Further, the test pieces treated for preliminary oxidation under the conditions of the atmosphere, temperature, and time shown in Table 2 were also, in the same way as above, subjected to oxidation tests in a reformed gas environment, analyzed by GDS for the surface oxide films formed in a reformed gas environment, and subjected to the repeated oxidation tests in the air after the oxidation tests in the reformed gas environment. Note that the "%" in the column of "Atmosphere" in the preliminary oxidation tests shown in Table 2 means vol%. Further, the atmospheres "a" to "e" of the preliminary oxidation shown in Table 2 define gas environments of the following compositions.

Atmosphere "a": 20%$H_2O$-15%$CO_2$-5%CO-30%$H_2$-30%$N_2$
Atmosphere "b": 25%$H_2O$-8%$CO_2$-8%CO-59%$H_2$
Atmosphere "c": 16%$H_2O$-43%$H_2$-41%$N_2$
Atmosphere "d": 3%$H_2O$-9%$CO_2$-16%CO-32%$H_2$-4O%$N_2$
Atmosphere "e": 24%$H_2O$-19%$CO_2$-5%$H_2$-52%$N_2$

Further, in Table 2, the "Steel" column, test pieces with either the asterisks "*", "**", or "***" attached indicate test piece treated by preliminary oxidation.

Table 1

| Steel | Components (mass%) | | | | | | | | | | |
|---|---|---|---|---|---|---|---|---|---|---|---|
| | C | Si | Mn | P | S | Cr | Nb | Al | N | Formula (i) | Others |
| A | 0.015 | 0.041 | 0.15 | 0.025 | 0.0008 | 19.4 | 0.55 | 0.04 | 0.012 | 22.7 | V: 0.2 |
| B | 0.011 | 1.10 | 0.45 | 0.020 | 0.0005 | 17.7 | 0.27 | 0.35 | 0.008 | 24.2 | Ni, Cu: 0.2 |
| C | 0.011 | 2.51 | 0.31 | 0.025 | 0.0003 | 17.6 | 0.29 | 0.02 | 0.009 | 31.0 | |
| D | 0.024 | 0.10 | 0.80 | 0.035 | 0.0003 | 23.2 | 0.28 | 0.03 | 0.015 | 25.1 | Mo: 1.4, Ti: 0.15 |
| E | 0.011 | 3.45 | 0.31 | 0.025 | 0.0003 | 19.4 | 0.31 | 0.04 | 0.012 | 37.6 | B, Mg: 0.0005, Sn: 0.1 |

(continued)

| Steel | Components (mass%) | | | | | | | | | | |
|---|---|---|---|---|---|---|---|---|---|---|---|
| | C | Si | Mn | P | S | Cr | Nb | Al | N | Formula (i) | Others |
| F | 0.015 | 2.78 | 0.20 | 0.019 | 0.0009 | 14.8 | 0.15 | 0.10 | 0.026 | 29.2 | La: 0.05, Ca: 0.0005 |
| G | 0.012 | 1.20 | 0.42 | 0.025 | 0.0005 | 17.8 | 0.28 | 0.33 | 0.01 | 24.8 | V: 0.3, B, Mg: 0.0007 |
| H | 0.017 | 3.05 | 0.69 | 0.023 | 0.0008 | 16.9 | 0.22 | 1.53 | 0.011 | 33.3 | Co: 0.1, W: 0.3 |
| I | 0.020 | 1.30 | 0.40 | 0.025 | 0.0010 | 15.2 | 0.008 | 0.05 | 0.010 | 22.1 | V: 0.1 |
| J | 0.010 | 0.81 | 0.80 | 0.028 | 0.0005 | 14.1 | 0.10 | 0.55 | 0.015 | 19.2 | |
| K | 0.015 | 0.31 | 1.20 | 0.031 | 0.0055 | 18.5 | 0.40 | 0.05 | 0.021 | 22.1 | |
| L | 0.023 | 2.55 | 0.50 | 0.022 | 0.0035 | 11.8 | 0.45 | 0.03 | 0.040 | 26.0 | |
| M | 0.024 | 0.51 | 0.91 | 0.032 | 0.0009 | 18.7 | 0.27 | 0.64 | 0.013 | 22.7 | |
| N | 0.011 | 1.53 | 1.35 | 0.024 | 0.0012 | 13.4 | 0.39 | 1.18 | 0.010 | 23.2 | |
| O | 0.022 | 0.73 | 2.54 | 0.027 | 0.0009 | 17.9 | 0.45 | 0.04 | 0.016 | 25.0 | |
| P | 0.019 | 0.42 | 1.08 | 0.019 | 0.0008 | 16.4 | 0.25 | 0.12 | 0.012 | 20.1 | |
| Q | 0.013 | 0.55 | 0.27 | 0.021 | 0.0014 | 19.3 | 0.34 | 0.76 | 0.009 | 23.0 | |
| R | 0.016 | 0.42 | 0.16 | 0.025 | 0.0005 | 19.3 | 0.52 | 0.40 | 0.013 | 22.6 | Ti: 0.35 |
| S | 0.022 | 0.24 | 0.08 | 0.026 | 0.0007 | 22.4 | 0.49 | 0.09 | 0.016 | 24.7 | |

Steel Components (mass%) C Si Mn P S Cr Nb Al N Formula (i) Others A 0.015 0.41 0.15 0.025 0.0008 19.4 0.55 0.04 0.012 22.7 V: 0.2 B 0.011 1.10 0.45 0.020 0.0005 17.7 0.27 0.35 0.008 24.2 Ni, Cu: 0.2 C 0.011 2.51 0.31 0.025 0.0003 17.6 0.29 0.02 0.009 31.0 D 0.024 0.10 0.80 0.035 0.0003 23.2 0.28 0.03 0.015 25.1 Mo: 1.4, Ti: 0.15 E 0.0113.45 0.31 0.025 0.0003 19.4 0.31 0.04 0.012 37.6 B, Mg: 0.0005, Sn: 0.1 F 0.015 2.78 0.20 0.019 0.0009 14.8 0.15 0.10 0.026 29.2 La: 0.05, Ca: 0.0005 G 0.012 1.20 0.42 0.025 0.0005 17.8 0.28 0.33 0.01 24.8 V: 0.3, B, Mg: 0.0007 H 0.017 3.05 0.69 0.023 0.0008 16.9 0.22 1.53 0.01133.3 Co: 0.1, W: 0.3 I 0.020 1.30 0.40 0.025 0.0010 15.2 0.008 0.05 0.010 22.1 V: 0.1 J 0.010 0.81 0.80 0.028 0.0005 14.1 0.10 0.55 0.015 19.2 K 0.015 0.31 1.20 0.031 0.0055 18.5 0.40 0.05 0.021 22.1 L 0.023 2.55 0.50 0.022 0.0035 11.8 0.45 0.03 0.040 26.0 M 0.024 0.51 0.91 0.032 0.0009 18.7 0.27 0.64 0.013 22.7 N 0.011 1.53 1.35 0.024 0.0012 13.4 0.39 1.18 0.010 23.2 O 0.022 0.73 2.54 0.027 0.0009 17.9 0.45 0.04 0.016 25.0 P 0.019 0.42 1.08 0.019 0.0008 16.4 0.25 0.12 0.012 20.1 Q 0.013 0.55 0.27 0.021 0.0014 19.3 0.34 0.76 0.009 23.0 R 0.016 0.42 0.16 0.025 0.0005 19.3 0.52 0.40 0.013 22.6 Ti: 0.35 S 0.022 0.24 0.08 0.0260.0007 22.4 0.49 0.09 0.016 24.7

## Table 2

| No. | Steel | Preliminary oxidation conditions | | | Reformed gas environment oxidation tests 850°C×1000hr | | | Results of repeated oxidation tests in the air (25 min heating-5 min air cooling) ×400 cycles | | | Remarks |
|---|---|---|---|---|---|---|---|---|---|---|---|
| | | Atmosphere | Temperature (°C) | Time (hr) | Concentration in Cr-based oxides (mass%) Si | Mn | Concentrated elements right under film | 800°C | 900°C | 1000°C | |
| 1 | A | No preliminary oxidation | | | 0.8 | 0.0 | Si, Nb | Good | Good | Poor | Inv. ex. |
| 2 | B | | | | 1.4 | 0.9 | Si, Mn, Nb | Good | Good | Poor | Inv. ex. |
| 3 | C | | | | 3.2 | 1.0 | Si, Mn, Nb | Good | Good | Good | Inv. ex. |
| 4 | D | | | | 0.2 | 0.6 | Mn, Nb | Good | Good | Fair | Inv. ex. |
| 5 | E | | | | 3.1 | 1.5 | Si, Mn, Nb | Good | Good | Good | Inv. ex. |
| 6 | F | | | | 2.9 | 1.0 | Si, Mn, Nb | Good | Good | Fair | Inv. ex. |
| 7 | G | | | | 2.2 | 1.3 | Si, Mn, Nb | Good | Good | Good | Inv. ex. |
| 8 | H | | | | 1.5 | 1.3 | Si, Mn, Nb | Good | Good | Fair | Inv. ex. |
| 9 | A* | b | 420 | 70 | 0.9 | 0.6 | Si, Nb | Good | Good | Good | Inv. ex. |
| 10 | K* | d | 790 | 140 | 1.0 | 2.4 | Mn, Nb | Good | Good | Poor | Inv. ex. |
| 11 | M* | e | 570 | 160 | 0.6 | 1.0 | Si, Mn, Nb | Good | Good | Poor | Inv. ex. |
| 12 | N* | a | 650 | 100 | 1.3 | 0.7 | Si, Mn, Nb | Good | Good | Poor | Inv. ex. |
| 13 | Q* | c | 880 | 20 | 1.8 | 1.2 | Si, Mn, Nb | Good | Good | Poor | Inv. ex. |
| 14 | A** | b | 650 | 100 | 1.2 | 0.7 | Si, Nb | Good | Good | Good | Inv. ex. |
| 15 | I | No preliminary oxidation | | | (Fe, Cr)-based film | | Si | Good | Poor | Poor | Comp. ex. |
| 16 | J | | | | (Fe, Cr, Mn)-based film | | Si | Fair | Poor | Poor | Comp. ex. |
| 17 | K | | | | (Cr, Mn)-based film | | Mn | Fair | Poor | Poor | Comp. ex. |
| 18 | L | | | | (Fe, Cr)-based film | | Si | Poor | Poor | Poor | Comp. ex. |
| 19 | M | | | | 0.1 | 0.2 | | Good | Fair | Poor | Comp. ex. |
| 20 | N | | | | 0.2 | 0.1 | Si | Fair | Poor | Poor | Comp. ex. |
| 21 | O | | | | (Cr, Mn)-based film | | Mn | Poor | Poor | Poor | Comp. ex. |
| 22 | P | | | | 0.0 | 0.5 | | Good | Fair | Poor | Comp. ex. |
| 23 | Q | | | | 0.2 | 0.1 | | Poor | Poor | Poor | Comp. ex. |
| 24 | R | | | | (Fe, Cr)-based film | | Si | Poor | Poor | Poor | Comp. ex. |
| 25 | S | | | | 0.0 | 0.0 | | Good | Poor | Poor | Comp. ex. |
| 26 | I* | c | 810 | 150 | 0.2 | 0.2 | Si | Poor | Poor | Poor | Comp. ex. |
| 27 | J* | a | 680 | 80 | (Fe, Cr)-based film | | Si | Fair | Poor | Poor | Comp. ex. |
| 28 | L* | a | 910 | 110 | (Cr, Mn)-based film | | Mn | Good | Poor | Poor | Comp. ex. |
| 29 | O* | b | 540 | 160 | 0.0 | 0.9 | Si | Poor | Poor | Poor | Comp. ex. |
| 30 | P* | c | 770 | 90 | (Fe, Cr)-based film | | Nb | Good | Poor | Poor | Comp. ex. |
| 31 | R* | b | 860 | 120 | 0.1 | 0.0 | Si | Poor | Poor | Poor | Comp. ex. |
| 32 | S* | a | 820 | 130 | (Cr, Mn)-based film | | Mn | Good | Poor | Poor | Comp. ex. |
| 33 | K** | d | 480 | 70 | Fe-based film | | Mn | Fair | Poor | Poor | Comp. ex. |
| 34 | A*** | c | 1240 | 130 | 0.0 | 0.0 | | Poor | Poor | Poor | Comp. ex. |
| 35 | Q** | e | 750 | 40 | 0.0 | 0.0 | | Good | Fair | Poor | Comp. ex. |
| 36 | S** | b | 650 | 100 | 0.1 | 0.0 | Nb | Good | Poor | Poor | Comp. ex. |

The obtained results are shown in Table 2. Note that in Table 2, the "(Fe, Cr)-based film" means an oxide film mainly comprised of (Fe, Cr)-based oxides where Fe and Cr are detected along with O by GDS analysis and where Fe is detected in 10 mass% or more, Cr in 10 mass% or more, and a total of Fe and Cr in 50 mass% or more; the "(Cr, Mn)-based film" means an oxide film mainly comprised of (Cr, Mn)-based oxides where Cr and Mn are detected along with O by GDS analysis and where Cr is detected in 10 mass% or more, Mn in 10 mass% or more, and a total of Cr and Mn in 50 mass% or more; and the (Fe, Cr, Mn)-based film" means an oxide film mainly comprised of (Fe, Cr, Mn)-based oxides where Fe, Cr, and Mn are detected along with O by GDS analysis and where Fe is detected in 5 mass% or more, Cr in 5 mass% or more, Mn in 5 mass% or more, and a total of Fe, Cr, and Mn in 50 mass% or more,

Nos. 1 to 8 are test pieces of the steels A to H satisfying the components of the elements and the formula (i) prescribed in the present invention. Nos. 1 to 8 are formed with high durability Cr-based oxide films mainly comprised of Cr-based oxides containing Si and/or Mn in 0.5 mass% or more after oxidation tests simulating a reformed gas environment. In each case, the evaluation in the repeated oxidation tests in the air at the heating temperatures 800°C and 900°C was "Good". The results of No. 3 are shown in FIG. 1 as an example of GDS analysis of an oxide film after oxidation tests simulating a reformed gas environment.

Further, Nos. 4, 6, and 8 are test pieces with values of the formula (i) of 25 or more. The durabilities of the Cr-based oxide films were improved, and the evaluations at the heating temperature of 1000°C were "Fair". Nos. 3 and 5 are test pieces containing Si: over 2.5% and Al: 0.50% or less and with values of the formula (i) of 30 or more. The durabilities of the Cr-based oxide films of Nos. 3 and 5 were remarkably improved, and the evaluations at the heating temperature of 1000°C as well were "Good". No. 7 is a test piece of the same steel as No. 2 plus B, V, and Mg added compositely. The durability of the Cr-based oxide film on No. 7 was remarkably improved, and the evaluation at the heating temperature 1000°C as well was "Good".

Nos. 9 and 14 are the test pieces of same steel A as No. 1 but treated by preliminary oxidation. The durabilities of the Cr-based oxide films of Nos. 9 and 14 were improved, and the evaluations at the heating temperature of 1000°C were improved to "Good".

Nos. 17, 19, 20, 23 are test pieces satisfying the components of elements and the formula (i) prescribed in the present invention, but not having Cr-based oxide films mainly comprised of Cr-based oxides containing Si and/or Mn in 0.5 mass% or more. Further, Nos. 17, 19, 20, and 23 all have compositions where one or more of the components of Mn, Si, and Al are outside the preferable range of components. Specifically, the steel K of No. 17 had a content of Mn of over 0.95%, while the steel M of No. 19 had a content of Si of less than 2.50% and a content of Al of over 0.5%. The steel N of No. 20 had a content of Mn of over 0.95%, a content of Si of less than 2.50%, and a content of Al of over 0.5%. Further, the steel Q of No. 23 had a content of Si of less than 2.50% and a content of Al of over 0.5%. Nos. 17, 19, 20, and 23 all are test pieces which do not contain Mn, Si, and Al to an extent where the above-mentioned actions and effects of Si and Mn can be positively utilized and, further, are not treated by preliminary oxidation. After oxidation tests simulating a reformed gas environment, No. 17 was formed with an oxide film mainly comprised of (Cr, Mn)-based oxides. Although Nos. 19, 20, and 23 were formed with Cr-based oxide films, the Si and Mn in the Cr-based oxides of the Cr-based oxide films were less than 0.5 mass%. The evaluations in repeated oxidation tests in the air at the heating temperature of 900°C were "Poor" or "Fair".

Nos. 10, 11, 12, 13 are all test pieces of steels of respectively the same compositions as Nos. 17, 19, 20, and 23 but treated by preliminary oxidation. Due to the preliminary oxidation, the oxide films were improved in durability. After oxidation tests simulating a reformed gas environment, high durability Cr-based oxide films mainly comprised of Cr-based oxides containing Si and/or Mn in 0.5 mass% or more were formed. Nos. 10 to 13 were all improved in evaluation in repeated oxidation tests in the air at heating temperatures of 800°C and 900°C to "Good".

No, 16 is a test piece where the formula (i) is outside the lower limit of the suitable range of the present invention. After oxidation tests simulating a reformed gas environment, an oxide film mainly comprised of (Fe, Cr, Mn)-based oxides was formed. This was evaluated in repeated oxidation tests in the air at a heating temperature of 900°C as "Poor".

No. 15 is a test piece where Nb is outside the lower limit of the suitable range of the present invention, No. 18 is a test piece where Cr is outside the lower limit of the suitable range of the present invention, No. 21 is a test piece where Mn is outside the lower limit of the suitable range of the present invention, and No. 24 is a test piece where Al and Ti are outside the upper limit of the suitable range of the present invention. After oxidation tests simulating a reformed gas environment, Nos. 15, 18, and 24 were formed with oxide films mainly comprised of (Fe, Cr)-based oxides while No. 21 was formed with an oxide film mainly comprised of (Cr, Mn)-based oxides. These were all evaluated in repeated oxidation tests in the air at heating temperatures of 900°C as "Poor".

No. 22 is a test piece formed with an Cr-based oxide film mainly comprised of Cr-based oxides containing Mn in 0.5 mass% or more after oxidation tests simulating a reformed gas environment, but the formula (i) was outside the lower limit of the suitable range of the present invention. The evaluation in repeated oxidation tests in the air at a heating temperature of 900°C was "Poor".

No. 25 is steel which has Si and Mn outside the preferable lower limits of the present invention. A Cr-based oxide film was formed, but the Si and Mn in the Cr-based oxides were less than 0.5 mass%. The evaluation in repeated oxidation tests in the air at a heating temperature of 900°C was "Poor".

Nos. 26, 28, 29, and 31 are the same steels as Nos. 15, 18, 21, and 24 which have steel components or the formula (i) prescribed in the present invention outside the suitable ranges, and Nos. 26, 28, 29, and 31 are treated by preliminary oxidation. However, there was no improvement in the oxide films. These were all evaluated in repeated oxidation tests in the air at heating temperatures of 900°C as "Poor", that is, with no improvement.

Nos. 27 and 30 are test pieces of the same steels as Nos. 16 and 22 where the formula (i) prescribed in the present invention was outside the suitable range, and Nos. 27 and 30 are treated by preliminary oxidation to improve the durabilities of the oxide films. The evaluations in repeated oxidation tests in the air at heating temperatures of 800°C were improved from "Fair" or "Poor" to "Good", but these were all evaluated at heating temperatures of 900°C as "Poor", that is, with no improvement.

Nos. 32 and 36 are test pieces of the same steels as the steel "S" of No. 25 where Si and Mn are outside the preferable lower limits of the present invention, and Nos. 32 and 36 are treated by preliminary oxidation. However, there was no improvement in the oxide films. The evaluations in repeated oxidation tests in the air at heating temperatures of 900°C were "Poor", that is, with no improvement.

Nos. 33 and 35 are test pieces of Nos. 17 and 23 satisfying the components of elements and the formula (i) prescribed in the present invention, and Nos. 33 and 35 are treated by preliminary oxidation. However, a content of water vapor in the atmosphere of the preliminary oxidation of No. 33 is less than 10% and a preliminary oxidation time of No. 33 is less than 100 hours, while a content of hydrogen in the atmosphere of the preliminary oxidation of No. 35 is less than 10% and a preliminary oxidation time of No. 35 is less than 100 hours. These comparative examples had no improvement in oxide films. In both cases, the evaluations in repeated oxidation tests in the air at heating temperatures of 900°C were "Poor", that is, with no improvement.

No. 34 is a test piece of No. 1 satisfying the components of elements and the formula (i) prescribed in the present invention, and No. 34 is treated by preliminary oxidation. However, the preliminary oxidation temperature was over 1000°C, so the durability of the oxide film deteriorated. After oxidation tests simulating a reformed gas environment, the film became an oxide film mainly comprised of Fe-based oxides. In repeated oxidation tests in the air at heating temperatures 800°C and 900°C, the evaluations deteriorated to "Poor".

Further, the evaluations in repeated oxidation tests in the air at heating temperatures of 900°C for the Invention Example Nos. 1 to 13 and Comparative Example Nos. 19, 20, 22, 23, 27, 30, and 35 formed with Cr-based oxide films after oxidation tests simulating the above-mentioned reformed gas environment can be plotted as shown in FIG. 2 with the formula (i) prescribed in the present invention on the abscissa and with the higher value of Si and Mn in the Cr-based oxides after oxidation tests simulating the reformed gas environment on the ordinate.

(Test Confirming Effect of Improvement of Oxidation Resistance by Addition of B and Mg)

To confirm the mutually assisting effect of improvement of the oxidation resistance between the elements B and Mg, the various types of ferritic stainless steels T and U of the components shown in Table 3 were smelted, hot rolled, annealed and pickled, cold rolled, and final annealed to produce thickness 1.0 mm cold rolled annealed materials. Next, from the ferritic stainless steels, Test Piece No. 101 to No. 106 were cut out. These test pieces were evaluated for durability by repeated oxidation tests in the air under the similar conditions to the Test Piece Nos. 1 to 36 of Table 2. The results of evaluation of the durability of the Test Piece No. 101 to No. 106 are shown in Table 4.

The steel A used for preparation of the Test Piece No. 1 of Table 2 does not have the elements B and Mg added to it and is evaluated as "Poor" in the repeated oxidation tests in the air at a heating temperature of 1000°C. As opposed to this, in the case of the Test Piece No. 101 to No. 106 with totals of amounts of addition of the elements B and Mg of 0.0002% or more, good results are obtained in repeated oxidation tests in the air at heating temperatures of 1000°C.

Table 3

| Steel | Components (mass%) | | | | | | | | | | |
|---|---|---|---|---|---|---|---|---|---|---|---|
| | C | Si | Mn | P | S | Cr | Nb | Al | N | Formula (i) | Others |
| T | 0.015 | 0.41 | 0.15 | 0.025 | 0.0008 | 19.4 | 0.55 | 0.04 | 0.012 | 22.7 | B: 0.0001, Mg: 0.0001 |
| U | 0.015 | 0.41 | 0.15 | 0.025 | 0.0008 | 19.4 | 0.55 | 0.04 | 0.012 | 22.7 | B: 0.0001, Mg: 0.0002 |
| V | 0.015 | 0.41 | 0.15 | 0.025 | 0.0008 | 19.4 | 0.55 | 0.04 | 0.012 | 22.7 | B: 0.0003 Mg: 0.0001 |

Table 4

| No. | Steel | Preliminary oxidation conditions | | | Reformed gas environment oxidation tests 850°C×1000 hr | | | Results of repeated oxidation tests in the air (25 min heating - 5 min air cooling) ×400 cycles | | | Remarks |
|---|---|---|---|---|---|---|---|---|---|---|---|
| | | Atmosphere | Temperature (°C) | Time (hr) | Concentration in Cr-based oxide film (mass%) | | Concentrated elements right under film | 800°C | 900°C | 1000°C | |
| | | | | | Si | Mn | | | | | |
| 101 | | No preliminary oxidation | | | 1.0 | 0.1 | Si, Nb | Good | Good | Good | Inv. ex. |
| 102 | U | | | | 1.2 | 0.0 | Si, Nb | Good | Good | Good | |
| 103 | V | | | | 0.9 | 0.1 | Si, Nb | Good | Good | Good | |
| 104 | T* | d | 790 | 140 | 1.2 | 0.3 | Si, Nb | Good | Good | Good | |
| 105 | U* | e | 570 | 160 | 1.4 | 0.2 | Si, Nb | Good | Good | Good | |
| 106 | V* | a | 650 | 100 | 1.1 | 0.2 | Si, Nb | Good | Good | Good | |

(Test Confirming Effect of Improvement of Oxidation Resistance by Addition of Mo)

The various types of ferritic stainless steels W and X of the components shown in Table 5 were smelted, hot rolled, annealed and pickled, cold rolled, and final annealed to produce thickness 1.0 mm cold rolled annealed materials. Next, from the ferritic stainless steels, Test Piece No. 201 to No. 204 were cut out. These test pieces were evaluated for durability by repeated oxidation tests in the air under the similar conditions to the Test Piece Nos. 1 to 36 of Table 2. The results of evaluation of the durability of the Test Piece No. 101 to No. 106 are shown in Table 6.

The steel D used for preparation of the Test Piece No. 4 of Table 2 and the steel X used for preparation of the Test Piece No. 204 of Table 6 both contain Mo: 0.5% or more. However, when preliminary oxidation is not performed to them, the evaluation in repeated oxidation tests in the air at a heating temperature of 1000°C is "Fair". As opposed to this, the result of repeated oxidation tests in the air using the Test Piece No. 201 containing Mo: 0.4% was better than the test results using the Test Piece No. 4 and No. 204 regardless of performing or not performing the preliminary oxidation treatment. Further, from the results of the repeated oxidation tests in the air of the Test Piece No. 201 to No. 204, it is learned that even if the ferritic stainless steel of the present invention has Mo: 0.5% or more, by performing preliminary oxidation, the ferritic stainless steel is provided with an oxidation resistance equal to that of a content of Mo of 0.4.

Table 5

| Steel | Components (mass%) | | | | | | | | | | |
|-------|-------|------|------|-------|--------|------|------|------|-------|-------------|---------|
|       | C     | Si   | Mn   | P     | S      | Cr   | Nb   | Al   | N     | Formula (i) | Others  |
| W     | 0.010 | 0.88 | 0.43 | 0.026 | 0.0010 | 20.1 | 0.16 | 0.02 | 0.013 | 25.3        | Mo: 0.4 |
| X     | 0.010 | 0.88 | 0.43 | 0.026 | 0.0010 | 20.1 | 0.16 | 0.02 | 0.013 | 25.3        | Mo: 1.0 |

Table 6

| No. | Steel | Preliminary oxidation conditions | | | Reformed gas environment oxidation tests 850°C×1000 hr | | | Results of repeated oxidation tests in the air (25 min heating-5 min air cooling) ×400 cycles | | | Remarks |
| | | Atmosphere | Temperature (°C) | Time (hr) | Concentration in Cr-based oxide film (mass%) | | Concentrated elements right below film | 800°C | 900°C | 1000°C | |
| | | | | | Si | Mn | | | | | |
| 201 | W | No preliminary oxidation | | | 1.7 | 0.4 | Si, Mn, Nb | Good | Good | Good | |
| 202 | X | | | | 1.0 | 0.4 | Si, Mn, Nb | Good | Good | Fair | |
| 203 | W* | b | 750 | 110 | 2.1 | 0.9 | Si, Mn, Nb | Good | Good | Good | Inv. ex. |
| 204 | X* | c | 690 | 130 | 1.8 | 0.8 | Si, Mn, Nb | Good | Good | Good | |

From the above, it was clarified that steel satisfying the composition of elements and the formula (i) prescribed in the present invention and having a Cr-based oxide film mainly comprised of a Cr-based oxide film mainly comprised of Cr-based oxides containing Si and/or Mn in 0.5 mass% or more on the surface after oxidation tests simulating a reformed gas environment was better than the comparative examples in evaluation in repeated oxidation tests in the air at a heating temperature of 900°C and is excellent in durability of the oxide film formed in a reformed gas environment. Further, it was learned that steel obtained by preliminary oxidation of steel satisfying the composition of elements and the formula (i) prescribed in the present invention under the conditions prescribed in the present invention is formed with a Cr-based oxide film mainly comprised of Cr-based oxides containing Si and/or Mn in 0.5 mass% or more in a reformed gas environment. On the other hand, it was learned that steel not satisfying the components of the elements prescribed by the present invention, whether or not performing preliminary oxidation under the conditions prescribed by the present invention, is not formed with a Cr-based oxide film mainly comprised of Cr-based oxides containing Si and/or Mn in 0.5 mass% or more in a reformed gas environment. Further, steel not satisfying the formula (i) prescribed in the present invention sometimes is formed with a Cr-based oxide film mainly comprised of Cr-based oxides containing Si and/or Mn in 0.5 mass% or more in a reformed gas environment. However, it is learned that solid solutions of Si and Mn in the Cr-based oxides and oxides of Si, Mn, and Nb right under the Cr-based oxide film are not sufficiently formed, the durability of the Cr-based oxide film is not sufficiently improved overall by concentration of Si, Mn, and Nb, the evaluation in repeated oxidation tests in the air at a heating temperature of 900°C is poor, and the durability of the oxide film formed in a reformed gas environment is insufficient.

Further, from the above, it is made clear that even when each of the amounts of addition of B and Mg in the steel is insufficient for obtaining the effect of improvement of the oxidation resistance, the effect of improvement of the oxidation resistance is promoted when the total amount satisfies the formula (ii).

Industrial Applicability

According to the present invention, it is possible to provide ferritic stainless steel for reformer for hydrogen production having both excellent oxidation resistance and economy by optimizing the amounts of Si, Mn, and Nb, adding trace amounts of V, B, Mg, etc., and adjusting the amounts of addition of Al and Ti in a reformed gas environment, without relying on addition of rare earth elements or large amounts of Ni. The ferritic stainless steel of the present invention can be produced industrially without relying on a special method of production.

**Claims**

1. Ferritic stainless steel for reformer for hydrogen production having a composition consisting of, by mass%,

> Cr: 12% to 24%,
> C: 0.001% to 0.03%,
> Al: 0.001 % to 4%,
> P: 0.05% or less,
> S: 0.01% or less,
> N: 0.03% or less,
> Nb: 0.01% to 1%, and
> at least one of
> Si: 0.3% to 4% and
> Mn: over 0.1% to 2%, and
> optionally one or more of
> Ni: 1% or less,
> Cu: 1% or less,
> Mo: 2% or less,
> Sn: 1% or less,
> W: 1% or less,
> Co: 0.5% or less,
> V: 0.5% or less,
> Ti: 0.3% or less,
> B: 0.005% or less,
> Ca: 0.005% or less,
> Mg: 0.005% or less,
> Zr: 0.5% or less,

La: 0.1% or less,
Y: 0.1% or less,
Hf: 0.1% or less, and
REM: 0.1% or less, and
having a balance of Fe and unavoidable impurities, and
satisfying formula (i), and
having an oxide film on surface thereof, wherein the oxide film is comprised of an oxide containing at least one element among Si and Mn in 0.5 mass% or more and containing Cr in 50 mass% or more, and wherein a ratio of the oxide to the oxide film by volume is 50% or more;

$$Cr+5Si+Mn+2Nb \geq 22 \cdots (i),$$

wherein the symbols of elements in the formula mean the content in mass% of those elements in the steel.

2. The ferritic stainless steel for reformer for hydrogen production according to claim 1, wherein Mn is less than 0.95%.

3. The ferritic stainless steel for reformer for hydrogen production according to claim 1 or 2, wherein Si is over 2.50%.

4. The ferritic stainless steel for reformer for hydrogen production according to any one of claims 1 to 3, wherein Al is 0.5% or less.

5. The ferritic stainless steel for reformer for hydrogen production according to claim 4, wherein Al is 0.08% or less.

6. The ferritic stainless steel for reformer for hydrogen production according to any one of claims 1 to 5, wherein said stainless steel contains, by mass%, one or more of Ni: 0.1 to 1%, Cu: 0.1 to 1%, Mo: 0.1 to 2%, Sn: 0.1 to 1%, W: 0.1 to 1%, Co: 0.1 to 0.5%, V: 0.05 to 0.5%, Ti: 0.01 to 0.3%, B: 0.0002 to 0.005%, Ca: 0.0001 to 0.005%, and Mg: 0.0002 to 0.005%.

7. The ferritic stainless steel for reformer for hydrogen production according to any one of claims 1 to 5, wherein said stainless steel contains, by mass%, one or more of Zr: 0.01 to 0.5%s, La: 0.001 to 0.1%, Y: 0.001 to 0.1%, Hf: 0.001 to 0.1%, and REM: 0.001 to 0.1%.

8. A method of production of ferritic stainless steel for reformer for hydrogen production comprising heat treating a stainless steel material having a composition according to any one of claims 1 to 7 and satisfying formula (i),

$$Cr+5Si+Mn+2Nb \geq 22 \; ---(i) \; \P$$

in an atmosphere containing a water content of 10 vol% to 50 vol% and hydrogen of 10 vol% to 70 vol% at 300 to 1000°C in range to thereby form on the surface of said stainless steel material an oxide film, wherein the oxide film is composed of an oxide containing at least one element among Si and Mn in 0.5 mass% or more and containing Cr in 50 mass% or more, and wherein a ratio of the oxide to the oxide film by volume is 50% or more.

**Patentansprüche**

1. Ferritischer Edelstahl für einen Reformer zur Wasserstofferzeugung mit einer Zusammensetzung bestehend aus, in Massen-%,

Cr: 12% bis 24%,
C: 0,001% bis 0,03%,
Al: 0,001% bis 4%,
P: 0,05% oder weniger,
S: 0,01% oder weniger,
N: 0,03 % oder weniger,
Nb: 0,01% bis 1%, und
mindestens einem aus

Si: 0,3 % bis 4%, und

Mn: mehr als 0,1% bis 2%, und

gegebenenfalls einem oder mehreren von

Ni: 1% oder weniger,

Cu: 1% oder weniger,

Mo: 2% oder weniger,

Sn: 1% oder weniger,

W: 1% oder weniger,

Co: 0,5% oder weniger,

V: 0,5% oder weniger,

Ti: 0,3% oder weniger,

B: 0,005% oder weniger,

Ca: 0,005% oder weniger,

Mg: 0,005% oder weniger,

Zr: 0,5% oder weniger,

La: 0,1% oder weniger,

Y: 0,1% oder weniger,

Hf: 0,1% oder weniger, und

REM: 0,1% oder weniger, und

mit einem Rest aus Fe und unvermeidbaren Verunreinigungen, und

der die Formel (i) erfüllt, und

der einen Oxidfilm auf der Oberfläche aufweist, wobei der Oxidfilm ein Oxid umfasst, das mindestens ein Element aus Si und Mn zu 0,5 Massen-% oder mehr enthält und Cr zu 50 Massen-% oder mehr enthält, und wobei ein Volumenverhältnis des Oxids zum Oxidfilm 50 % oder mehr beträgt;

$$Cr+5Si+Mn+2Nb \geq 22 \cdots (i),$$

wobei die Symbole der Elemente in der Formel den Gehalt dieser Elemente im Stahl in Massen-% angeben.

2. Der ferritische Edelstahl für einen Reformer zur Wasserstofferzeugung nach Anspruch 1, wobei Mn weniger als 0,95 % beträgt.

3. Der ferritische Edelstahl für einen Reformer zur Wasserstofferzeugung nach Anspruch 1 oder 2, wobei Si mehr als 2,50% beträgt.

4. Der ferritische Edelstahl für einen Reformer zur Wasserstofferzeugung nach einem der Ansprüche 1 bis 3, wobei Al 0,5 % oder weniger beträgt.

5. Der ferritische Edelstahl für einen Reformer zur Wasserstofferzeugung nach Anspruch 4, wobei Al 0,08 % oder weniger beträgt.

6. Der ferritische Edelstahl für einen Reformer zur Wasserstofferzeugung nach einem der Ansprüche 1 bis 5, wobei der Edelstahl in Massen-% eines oder mehrere von: Ni: 0,1 bis 1%, Cu: 0,1 bis 1%, Mo: 0,1 bis 2%, Sn: 0,1 bis 1%, W: 0,1 bis 1%, Co: 0,1 bis 0,5%, V: 0,05 bis 0,5%, Ti: 0,01 bis 0,3%, B: 0,0002 bis 0,005%, Ca: 0,0001 bis 0,005%, und Mg: 0,0002 bis 0,005% enthält.

7. Der ferritische Edelstahl Stahl für einen Reformer zur Wasserstofferzeugung nach einem der Ansprüche 1 bis 5, wobei der Edelstahl in Massen-% eines oder mehrere von:
Zr: 0,01 bis 0,5%, La: 0,001 bis 0,1%, Y: 0,001 bis 0,1%, Hf: 0,001 bis 0,1 %, und REM: 0,001 bis 0,1 % enthält.

8. Ein Verfahren zur Herstellung von ferritischem Edelstahl für einen Reformer zur Wasserstofferzeugung, umfassend die Wärmebehandlung eines Edelstahlmaterials mit einer Zusammensetzung nach einem der Ansprüche 1 bis 7, und das die Formel (i) Cr+5Si+Mn+2Nb $\geq$ 22 $\cdots$(i) erfüllt, in einer Atmosphäre, die einen Wassergehalt von 10 Vol% bis 50 Vol% und Wasserstoff von 10 Vol% bis 70 Vol% enthält, bei 300 bis 1000°C, um dadurch auf der Oberfläche des Edelstahlmaterials einen Oxidfilm zu bilden, wobei der Oxidfilm aus einem Oxid zusammengesetzt ist, das mindestens ein Element aus Si und Mn zu 0,5 Massen-% oder mehr enthält und Cr zu 50 Massen-% oder mehr enthält, und wobei das Volumenverhältnis des Oxids zum Oxidfilm 50 % oder mehr beträgt.

**Revendications**

1. Acier inoxydable ferritique pour reformeur pour production d'hydrogène ayant une composition consistant en, en % en masse,

> Cr : 12 % à 24 %,
> C : 0,001 % à 0,03 %,
> Al : 0,001 % à 4 %,
> P : 0,05 % ou inférieur,
> S : 0,01 % ou inférieur,
> N : 0,03 % ou inférieur,
> Nb : 0,01 % à 1 %, et
> au moins un de
> Si : 0,3 % à 4 % et
> Mn : plus de 0,1 % à 2 %, et
> éventuellement un ou plusieurs de
> Ni : 1 % ou inférieur,
> Cu : 1 % ou inférieur,
> Mo : 2 % ou inférieur,
> Sn : 1 % ou inférieur,
> W : 1 % ou inférieur,
> Co : 0,5 % ou inférieur,
> V : 0,5 % ou inférieur,
> Ti : 0,3 % ou inférieur,
> B : 0,005 % ou inférieur,
> Ca : 0,005 % ou inférieur,
> Mg : 0,005 % ou inférieur,
> Zr : 0,5 % ou inférieur,
> La : 0,1 % ou inférieur,
> Y : 0,1 % ou inférieur,
> Hf : 0,1 % ou inférieur, et
> REM : 0,1 % ou inférieur, et
> ayant un reste de Fe et d'impuretés inévitables, et
> satisfaisant la formule (i), et
> ayant un film d'oxyde sur une surface de celui-ci, où le film d'oxyde est constitué d'un oxyde contenant au moins un élément parmi Si et Mn dans 0,5 % en masse ou plus et contenant Cr dans 50 % en masse ou plus, et où un rapport de l'oxyde au film d'oxyde en volume est de 50 % ou supérieur ;

$$Cr + 5Si + Mn + 2Nb \geq 22 \ldots (i),$$

où les symboles d'éléments dans la formule indiquent la teneur en % en masse de ces éléments dans l'acier.

2. Acier inoxydable ferritique pour reformeur pour production d'hydrogène selon la revendication 1, où Mn est inférieur à 0,95 %.

3. Acier inoxydable ferritique pour reformeur pour production d'hydrogène selon la revendication 1 ou 2, où Si est supérieur à 2,50 %.

4. Acier inoxydable ferritique pour reformeur pour production d'hydrogène selon l'une quelconque des revendications 1 à 3, où Al est de 0,5 % ou inférieur.

5. Acier inoxydable ferritique pour reformeur pour production d'hydrogène selon la revendication 4, où Al est de 0,08 % ou inférieur.

6. Acier inoxydable ferritique pour reformeur pour production d'hydrogène selon l'une quelconque des revendications 1 à 5, où ledit acier inoxydable contient, en % en masse, un ou plusieurs de Ni : 0,1 à 1 %, Cu : 0,1 à 1 %, Mo : 0,1 à 2 %, Sn : 0,1 à 1 %, W : 0,1 à 1 %, Co : 0,1 à 0,5 %, V : 0,05 à 0,5 %, Ti : 0,01 à 0,3 %, B : 0,0002 à 0,005 %, Ca : 0,0001 à 0,005 %, et Mg : 0,0002 à 0,005 %.

7. Acier inoxydable ferritique pour reformeur pour production d'hydrogène selon l'une quelconque des revendications 1 à 5, où ledit acier inoxydable contient, en % en masse, un ou plusieurs de Zr : 0,01 à 0,5 %, La : 0,001 à 0,1 %, Y : 0,001 à 0,1 %, Hf : 0,001 à 0,1 %, et REM : 0,001 à 0,1 %.

8. Procédé de production d'acier inoxydable ferritique pour reformeur pour production d'hydrogène comprenant le traitement thermique d'un matériau d'acier inoxydable ayant une composition selon l'une quelconque des revendications 1 à 7 et satisfaisant la formule (i),

$$Cr + 5Si + Mn + 2Nb \geq 22 \ldots (i)$$

dans une atmosphère contenant une teneur en eau de 10 % en volume à 50 % en volume et de l'hydrogène de 10 % en volume à 70 % en volume à de 300 à 1 000°C dans un intervalle pour former par-là sur la surface dudit matériau d'acier inoxydable un film d'oxyde, où le film d'oxyde est constitué d'un oxyde contenant au moins un élément parmi Si et Mn dans 0,5 % en masse ou plus et contenant Cr dans 50 % en masse ou plus, et où un rapport de l'oxyde au film d'oxyde en volume est de 50 % ou supérieur.

## FIG. 1

C STEEL AFTER OXIDATION IN A REFORMED GAS ATMOSPHERE (850°C x 1000hr)

## FIG. 2

EVALUATION OF REPEATED OXIDATION TESTS IN AIR (900°C)
X (POOR): ABNORMAL OXIDATION
△ (FAIR): PEELING OF OXIDE FILM
O (GOOD): NORMAL OXIDATION

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3886785 B
- JP 3942876 B
- JP 3910419 B
- JP 2009167443 A
- JP 2012012674 A
- WO 2014010680 A1
- JP 5320866 A
- JP 2008101240 A
- JP 2002256398 A
- JP 2011162843 A
- EP 2639325 A1
- US 2010122800 A1
- US 2013080526 W
- JP 2008156692 A
- JP 2003328088 A